Europäisches Patentamt

European Patent Office

Office européen des brevets

(11) Publication number: **0 175 858**
**B1**

## EUROPEAN PATENT SPECIFICATION

(45) Date of publication of patent specification: **23.08.89**

(51) Int. Cl.⁴: **F 16 C 33/34**

(21) Application number: **85108426.9**

(22) Date of filing: **08.07.85**

(54) **Radial roller bearing.**

(30) Priority: **26.09.84 SE 8404813**

(43) Date of publication of application:
**02.04.86 Bulletin 86/14**

(45) Publication of the grant of the patent:
**23.08.89 Bulletin 89/34**

(84) Designated Contracting States:
**DE FR GB IT**

(56) References cited:
**AT-B- 83 309**
**DE-C- 359 464**
**DE-U-1 675 575**
**FR-A- 487 607**
**GB-A-2 018 912**
**US-A-2 595 121**
**US-A-3 628 836**

(73) Proprietor: **Aktiebolaget SKF**
**S-415 50 Göteborg (SE)**

(72) Inventor: **Kellström, Magnus**
**Ensittarevägen 30**
**S-43341 Partille (SE)**

(74) Representative: **Kristiansen, Alf P.**
**Aktiebolaget SKF Patent Department**
**S-415 50 Göteborg (SE)**

Courier Press, Leamington Spa, England.

# Description

The invention relates to a roller bearing of the kind defined in the preamble of the claim.

Such bearings are known from e.g. the US Patent publication 2.595.121, which shows bearings with concave rollers, and the SE patent publication 53 256, which shows bearings with convex rollers. By the fact that the profile curve radii of the raceways and the rollers in such bearings are considerably greater than corresponding radii in e.g. spherical roller bearings with corresponding radial measures, the rollers can be made longer than what is possible in such spherical bearings, which enhances the radial load carrying capacity. Furthermore, the inner friction is lower in a bearing according to the preamble than in a spherical roller bearing with equal width, i.e. with equally long rollers. A disadvantage is that the bearing, when provided with usual flanges and cage, lacks the self-aligning capacity of the spherical bearing, which capacity is useful in many respects. Furthermore, it has hitherto been considered necessary to provide a roller mounting opening on one bearing ring, such as at reference numeral 8 in the SE patent 53 256, in order to permit mounting of a desired number of rollers in the bearing. Such an opening constitutes a complication and limits the usefulness of the bearing, as the opening must not be situated in any loaded portion of the bearing. If a mounting opening is absent, a known bearing of the kind defined above, e.g. according to figure 8 in the above mentioned US patent publication, has to be provided with rollers while the outer and the inner rings are eccentrically positioned, which permits filling the bearing with but a comparatively small number of rollers. Such a bearing, therefore, has a comparatively poor load carrying capacity.

The object of the present invention is to provide a bearing of the kind defined in the preamble, which bearing has an improved radial load carrying capacity and at the same time permits a certain relative inclination and axial displacement of the raceways of the bearing. This is achieved by giving the bearing the characterizing features stated in the claim.

Such a bearing can be provided with a great number of rollers without having any roller mounting opening.

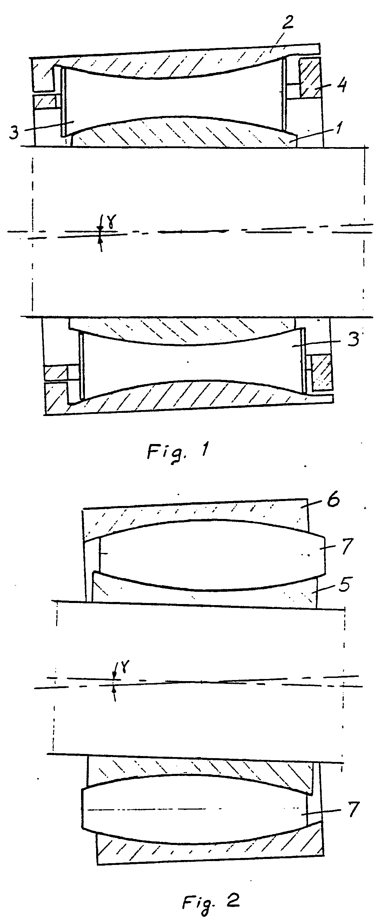

The following is a detailed description of the invention with reference to the accompanying drawing, in which figures 1 and 2 show axial sections of bearings according to two embodiments of the invention.

Figure 1 shows a bearing comprising an inner ring 1 with an inner raceway and an outer ring 2 with an outer raceway. A number of rollers 3 are arranged between the raceways. Each raceway has a convex curved profile in the shape of a circular arc, and the envelope surfaces of the rollers have a corresponding concave longitudinal section profile. The profile radius is considerably greater than the greatest distance between the central axis of the bearing and the raceway surfaces, The gentle crowning of the surfaces entails that the radial extension of the bearing required for a given roller length is small, which is space saving, and that the internal friction occurring in the bearing because of sliding in the contact between roller and raceway is low in comparison to what is the case in a spherical roller bearing with a corresponding load capacity and subjected to a corresponding load.

The bearing design permits a certain inclination $\gamma$ of the inner ring in relation to the outer ring. During inclination some rollers are displaced axially. Therefore the rollers must be allowed to perform axial movement to a sufficient extent. If, for example, a maximum inclination $\gamma$ of 1/2 degree is to be permitted, then the rollers must be allowed to be displaced about 2 mm in a bearing in which the radius of the pitch circle of the rollers is 50 mm, the smallest diameter of the rollers is 12 mm and the radius of curvature of the profiles of the raceways and the rollers is 500 mm. Thus, it must be seen to that no flanges or other axial limitations at the outer and inner raceway obstruct the axial displaceability of the rollers, and further, the rollers must have a sufficiently great axial play in a possibly used cage 4 for guiding and separation of the rollers. Beside being axially displaced, the rollers are also inclined to a certain extent in relation to the raceways, but this inclination is immaterial if not hampered by e.g. flanges.

Inclination of the raceways gives some rollers a somewhat smaller radial play between the raceways, but this decrease in play is so small that it does not significantly influence the ability of permitting such inclination which may occur in normal bearing applications, i.e. about a single degree at the most.

If the axial displaceability and inclinability of the rollers and a possible cage is not prevented by e.g. flanges at the raceways, the raceways can be displaced axially in relation to each other an unlimited distance, whereby also the rollers and a possible cage are displaced axially. This means that a maximum number of rollers can be inserted into the bearing during mounting without the need for a special roller mounting opening in a bearing ring.

A consequence of this characteristic is that the bearing, similar to e.g. cylindrical bearings without ring flanges, lacks the ability to take up thrust loads.

Figure 2 shows a bearing the inner ring 5 and outer ring 6 of which each being provided with a raceway with a concave profile. Rollers 7 with convex profiles are arranged between the raceways. Also this bearing may be provided with a roller cage, but a cage is omitted in the drawing for the sake of simplicity. Upon relative inclination $\gamma$ of the raceways of the bearing, the rollers are displaced axially, similar to what is the case in the embodiment according to figure 1. If the axial displaceability of the rollers is not limited by e.g. flanges at the raceways or by a cage, the inclination can proceed to an arbitrary angle γ without the rollers being squeezed between the raceways. The play between the raceways for some rollers is increased during inclination of the raceways, but the increase is insignificant at the most common inclination angles. In a bearing in which the races are inclined, a maximum number of rollers can be inserted between the raceways without the need for a roller mounting opening. As the rollers are self-guided, no cage is needed for roller guidance. Loose distance elements can be used to prevent mutual roller contact. If a conventional cage is desired, assembly of the bearing can take place if the cage has detachable end rings or a segment cage is used.

When the raceways of the bearing are axially displaced, the roller play between the raceways is decreased. The axial displacement can thus not proceed an unlimited distance. However, the bearing can be considered as freely movable axially within axial displacement distances which are usually occurring in normal applications, such as due to temperature dependant length variations in a shaft mounted in two bearings.

### Claim

A roller bearing comprising an inner and an outer raceway and a row of rollers (3, 7) arranged between and contacting the raceways (1, 2; 5, 6) the axes of the rollers being substantially parallel to the axes of the raceways when the latter are coinciding, the rollers and the raceways having correspondingly curved longitudinal section profiles in which the radius of curvature is substantially greater than the greatest distance between the central axis of the bearing and the surfaces of the raceways, characterised in

that the rollers are axially movable between the raceways without being obstructed by axial limitations at the raceways or by limited axial cage play for permitting relative inclination and axial displaceability of the raceways, said relative inclination or displaceability being limited only by the rollers being squeezed radially between the raceways.

### Patentanspruch

Rollenlager, enthaltend eine Innen- und Außenlaufbahn und eine Reihe von Rollen (3, 7), die zwischen den Laufbahnen (1, 2; 5, 6) diese berührend, angeordnet sind, wobei die Drehachsen der Rollen im wesentlichen parallel zu den Mittenlinien der Laufbahnen verlaufen, wenn diese Mittenlinien zusammenfallen und wobei die Rollen und die Laufbahnen einander entsprechend gekrümmte Längsschnittprofile mit einem Krümmungsradius, der wesentlich größer als der größte Abstand zwischen der Mittenachse des Lagers und den Flächen der Laufbahnen ist, aufweisen, dadurch gekennzeichnet, daß die Rollen zwischen den Laufbahnen axial beweglich angeordnet sind, ohne durch axiale Begrenzungen an den Laufbahnen oder durch begrenztes Axialspiel eines Käfigs behindert zu sein, so daß eine relative Schiefstellung und axiale Verschiebbarkeit der Laufflächen ermöglicht ist, wobei die relative Schiefstellung oder Verschiebbarkeit lediglich durch die radialem Druck zwischen den Laufbahnen ausgesetzten Rollen begrenzt ist.

### Revendication

Palier à rouleaux comprenant un chemin de roulement intérieur et un chemin de roulement extérieur et une rangée de rouleaux (3, 7) disposés entre les chemins de roulement (1, 2; 5, 6) et en contact avec eux, les axes des rouleaux étant sensiblement parallèles aux axes des chemins de roulement lorsque ces derniers coïncident, les rouleaux et les chemins de roulement présentant en section longitudinale des profils incurvés de façon correspondante dans lesquels le rayon de courbure est notablement plus grand que la plus grande distance entre l'axe central du roulement et les surfaces des chemins de roulement

caractérisé en ce que les rouleaux sont mobiles axialement entre les chemins de roulement sans être gênés par des limitations axiales au niveau des chemins de roulement ou par un jeu axial limité de la cage, de façon à permettre une inclinaison relative et une possibilité de déplacement axial relatif des chemins de roulement, lesdites inclinaisons et possibilité de déplacement n'étant limitées que par le serrage radial des rouleaux entre les chemins de roulement.

Fig. 1

Fig. 2

1